# EUROPÄISCHE PATENTSCHRIFT

(11) **EP 0 657 271 B1**
(45) Veröffentlichungstag und Bekanntmachung des Hinweises auf die Patenterteilung: **03.06.1998**
(21) Anmeldenummer: 94115416.3
(22) Anmeldetag: 30.09.1994
(51) Int. Cl.: B29C 45/40

(54) **Vorrichtung zum Auswerfen von Spritzgussteilen**
Apparatus for ejecting injection moulded parts
Dispositif pour éjecter des pièces moulées par injection

(30) Priorität: 01.12.1993 DE 4340946; 27.01.1994 DE 4402291
(43) Veröffentlichungstag der Anmeldung: 14.06.1995
(73) Patentinhaber: Ferromatik Milacron Maschinenbau GmbH, D-79364 Malterdingen (DE)
(72) Erfinder: Keitel, Ralph, Dipl.-Ing., D-79206 Breisach (DE)
(74) Vertreter: Röther, Peter, Dipl.-Phys.

(56) Entgegenhaltungen:
- DE-A- 4 218 822
- PATENT ABSTRACTS OF JAPAN vol. 16, no. 471 (M-1318), 30.September 1992 & JP 04 168018 A (FANUC)
- PATENT ABSTRACTS OF JAPAN vol. 12, no. 347 (M-743) [3194] , 19.September 1988 & JP 63 107533 A (FANUC)
- THOMA: "Elektrische Spritzgiessmaschine- sparsam und genau; Kurbelschieber treibt Auswerfer an" KUNSTSTOFFE, Bd. 82, Nr. 10, Oktober 1992, MUNCHEN DE, Seiten 891-893, XP002045072

## Beschreibung

Die Erfindung betrifft eine Vorrichtung zum Auswerfen von Spritzgußteilen aus Spritzgießformen mit mindestens einem Auswerferstift, der in einer sowohl die Formaufspannplatte als auch die an dieser Formaufspannplatte angeordnete eine Hälfte einer Spritzgießform durchsetzenden Bohrung mittels eines Kurbeltriebs axial verschiebbar ist, wobei der Kurbeltrieb in einem Gestell angeordnet ist, das im wesentlichen aus einer Traverse und zwei parallel zu dem mindestens einen Auswerferstift verlaufenden Profilen besteht, welche die Traverse mit der die Formhälfte tragenden Formaufspannplatte verbinden und der Kurbeltrieb aus mindestens einer im Gestell drehbar gelagerten Kurbelscheibe mit einem exzentrisch an dieser gelagerten Hebel besteht, der an einem auf den Profilen verschiebbar geführten Schlitten angreift, welcher den Auswerferstift trägt und die Kurbelscheibe (18) über einen eigenen motorischen Antrieb verfügt.

Spritzgießmaschinen weisen eine feststehende und eine auf Holmen verschiebbar geführte Formaufspannplatte für jeweils eine Hälfte eines Spritzgießwerkzeuges auf, die in der Schließstellung das Formnest für die herzustellenden Spritzgußteile einschließen.

Die bewegliche Formaufspannplatte wird mit Hilfe dieser Schließeinheit verschoben und so das Spritzgußwerkzeug in seine Geschlossen- und seine Öffnungsstellung verfahren. Gleichzeitig dient die Schließeinheit zum Aufbringen des Formzuhaltedrucks.

Das hergestellte Spritzgußteil wird mit Hilfe eines oder mehrerer Auswerfer während des Öffnens des Formwerkzeugs oder bei geöffnetem Formwerkzeug aus diesem herausgedrückt. Bei schlecht entformbaren Teilen, sei es wegen der komplizierten Formgeometrie, sei es infolge großer Adhäsionskräfte, ist es dabei oft erforderlich, den Auswerfer mehrfach hin- und herzubewegen, um das Teil aus der Form zu lösen. Damit die mitunter empfindlichen Teile dabei keinen Schaden nehmen, muß das Auswerfen behutsam erfolgen.

Aus der US-PS 4 207 051 ist ein Auswerfer der eingangs genannten Art bekannt. Der dort für die Bewegung des Auswerferstifts verantwortliche Kurbeltrieb besteht aus einer Kurbelscheibe, die als Zahnrad ausgebildet ist, dessen Zähne mit den Zähnen zweier Zahnstangen kämmen, von denen die eine mit der beweglichen Formaufspannplatte und die andere mit der feststehenden Formaufspannplatte fest verbunden ist. Wird die bewegliche Formaufspannplatte mit Hilfe der Schließeinrichtung verfahren, wird diese Bewegung über die Zahnstangen auf die Kurbelscheibe übertragen, die über den exzentrisch auf dieser angeordneten Hebel den Auswerferstift betätigt. Das heißt, daß die Auswerferbewegung direkt mit der Bewegung der Formaufspannplatte gekoppelt ist.

Es ist daher nicht möglich, unabhängig von der Öffnungs- und Schließbewegung der Form produktspezifische Auswurfparabeln zu verwirklichen. Die starre Kopplung der beiden Bewegungen hat darüber hinaus den Nachteil, daß die Auswerferstifte und die sie antreibenden Kurbeltriebe großen mechanischen Belastungen ausgesetzt sind, insbesondere dann, wenn bei schwer entformbaren Teilen der Auswerfer mehrfach hin- und hergefahren werden muß. Denn diese Wiederholbewegung setzt die Bewegung und damit das teilweise Schließen der Formhälfte voraus, wodurch die Teile beschädigt oder zerstört werden können.

Es sind daher im Stand der Technik bereits Vorrichtungen vorgeschlagen worden, bei denen sich die Auswerfervorrichtung mit der beweglichen Formaufspannplatte mitbewegt, die eigentliche Auswerferstiftbewegung aber unabhängig hiervon erfolgt.

So offenbart die JP-A-04-168018 eine Vorrichtung, bei der die Auswerferstiftbewegung durch einen Kniehebelantrieb erfolgt.

Aus der Druckschrift "Kunststoffe Bd. 82, (1992), Nr. 10, Seiten 891-893, Thoma, "Elektrische Spritzgießmaschinen - sparsam und genau" ist eine Vorrichtung bekannt, bei der die Auswerferstiftbewegung von einem Kurbeltrieb bewirkt wird, der aus einer Kurbelscheibe mit einem seitlich angeordneten, in einer vertikalen Führung auf- und abbewegbaren Zapfen besteht.

Die Erfindung geht aus von einer Vorrichtung, wie sie in der JP-A-63-107533 offenbart ist. Bei dieser Vorrichtung ist der Hebel, der die Auswerferstiftbewegung bewirkt, seitlich an einer Kurbelscheibe gelagert. Diese einseitige Lagerung führt dazu, daß die bei dem Auswerfvorgang auftretenden Kräfte eine unsymmetrische Belastung des Lagers bewirken, wodurch es in kurzer Zeit ausschlagen kann und somit beschädigt wird.

Der Erfindung liegt daher die Aufgabe zugrunde, eine Vorrichtung der eingangs genannten Art so auszubilden, daß die Bewegung des Auswerferstifts von der Bewegung der Formaufspannplatte entkoppelt ist, so daß produktspezifische Auswurfcharakteristiken möglich sind, wobei aber gleichzeitig für eine vollkommen symmetrische Kraftübertragung vom Kurbeltrieb auf den Auswerferstift gesorgt wird.

Die Erfindung löst diese Aufgabe dadurch, daß der Kurbeltrieb aus zwei parallel zueinander angeordneten Kurbelscheiben besteht, die synchron antreibbar sind und zwischen denen der den Schlitten verschiebende Hebel gelagert ist.

Weitere vorteilhafte Ausgestaltungen der Erfindung sind Gegenstand der abhängigen Ansprüche.

Somit ergibt sich eine stabile Ausführung des erfindungsgemäßen Kurbeltriebs, wodurch darüber hinaus eine vollkommen symmetrische Kraftübertragung auf den Auswerferstift gewährleistet ist.

Dabei können die Kurbelscheiben - wie bereits aus dem Stand der Technik bekannt - als Zahnräder ausgebildet sein, deren Zähne mit den Zähnen von jeweils einem Ritzel kämmen, die auf der durch den Elektromotor angetriebenen Welle angeordnet sind. Der Auswurfzeitpunkt, die Auswerfergeschwindigkeit und - kraft kann daher über den Antrieb individuell auf das zu entformende Teil eingestellt werden. Die Auswurfbewegung kann alternativ schon während der Öffnungsbewegung der Form oder erst bei geöffneter Form beginnen. Geschwindigkeits- und Kraftverlauf können so eingestellt sein, daß auf den ersten Millimetern des Fahrweges des Auswerferstifts bei geringer Geschwindigkeit eine große Kraft zum Losreißen des Spritzlings aufgebracht wird und danach bei geringerem Kraftaufwand und größerer Geschwindigkeit die Auswurfbewegung beendet wird.

Ebenso kann der Auswerferhub je nach Art des hergestellten Teils variiert werden.

Eine mehrmalige Hin- und Herbewegung des Auswerferstifts bei schlecht entformbaren Teilen ist mit der erfindungsgemäßen Vorrichtung sehr einfach und vor allen Dingen gezielt realisierbar.

Die oben dargestellten Auswurfcharakteristiken bzw. Auswurfparabeln lassen sich besonders leicht einstellen und verifizieren, wenn gemäß Anspruch 3 der Antrieb der Vorrichtung ein servoelektrischer Antrieb ist, der über die Driveeinheit frei programmierbar ist.

Dabei wird vorteilhaft die Kraft vom Motor auf den Kurbeltrieb über ein Getriebe und eine Kupplung übertragen.

Die Erfindung wird im folgenden anhand von Zeichnungen dargestellt und näher erläutert.

Es zeigen:

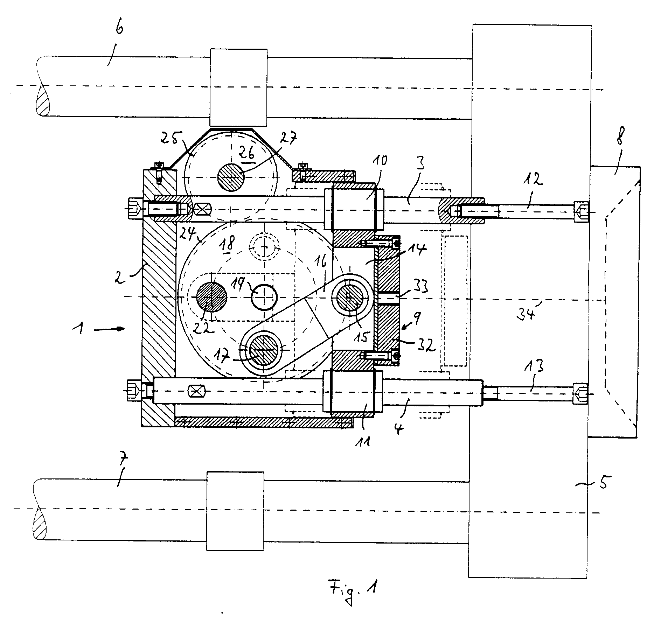

- Fig. 1: einen Kurbeltrieb für einen Auswerferstift in Seitenansicht (teilweise im Schnitt),
- Fig. 2: den Kurbeltrieb gemäß Fig. 1 von hinten gesehen in Richtung auf die Formaufspannplatte,
- Fig. 3: den Kurbeltrieb gemäß Figuren 1 und 2 von unten gesehen.

In den Figuren ist eine Vorrichtung zum Auswerfen von Spritzgußteilen aus Spritzgießformen allgemein mit dem Bezugszeichen 1 versehen. Sie besteht im wesentlichen aus einer Traverse 2, genauer einer Platte, die durch zwei Profilstege 3 und 4 mit der beweglichen Formaufspannplatte 5 einer Spritzgieß-maschine verbunden ist, wobei die Formaufspannplatte 5 auf vier Holmen 6 und 7, von denen lediglich zwei dargestellt sind, verschiebbar geführt ist. Hierzu dient eine nicht dargestellte Schließeinheit. Auf der der Vorrichtung 1 entgegengesetzten Seite der Formaufspannplatte 5 ist eine Hälfte 8 eines Spritzgießwerkzeuges angeordnet. Zusammen mit dieser Werkzeughälfte 8 wird mittels der Schließeinheit die bewegliche Formaufspannplatte 5 auf eine ( ebenfalls nicht dargestellte ) feststehende Formaufspannplatte zugefahren, an der die andere Werkzeughälfte angeordnet ist.

Auf den beiden Profilstangen 3 und 4 verschiebbar geführt ist ein die beiden Profilstangen miteinander verbindender Schlitten 9. Zur Minimierung der Reibung sind Kugelbüchsen 10 und 11 vorgesehen, die auf den Profilstangen 3 und 4 gleiten. Die Profilstangen 3 und 4 stehen lotrecht auf der Formaufspannplattenfläche und sind mittels die Aufspannplatte 5 durchsetzenden Bolzenschrauben 12 und 13 an dieser befestigt.

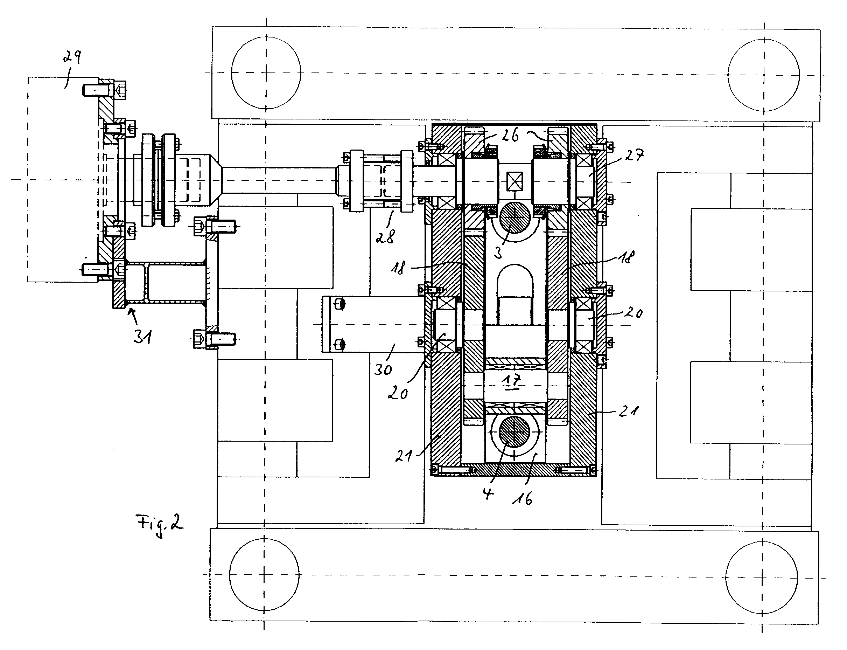

Der Schlitten 9 besitzt zwischen den Kugelbüchsen 10 und 11 eine Ausnehmung 14, in der ein Bolzen 15 vorgesehen ist, der als Welle für das eine Ende eines Hebels 16 dient, dessen anderes Ende auf einem Bolzen 17 gelagert ist, der exzentrisch auf einer Kurbelscheibe 18 angeordnet ist. Die Kurbelscheibe 18 ist drehbar auf einer Welle 19 gelagert, die wiederum, wie aus Fig. 2 ersichtlich, in Lagern 20 in Wänden 21 eines die Vorrichtung aufnehmenden Gehäuses gelagert ist.

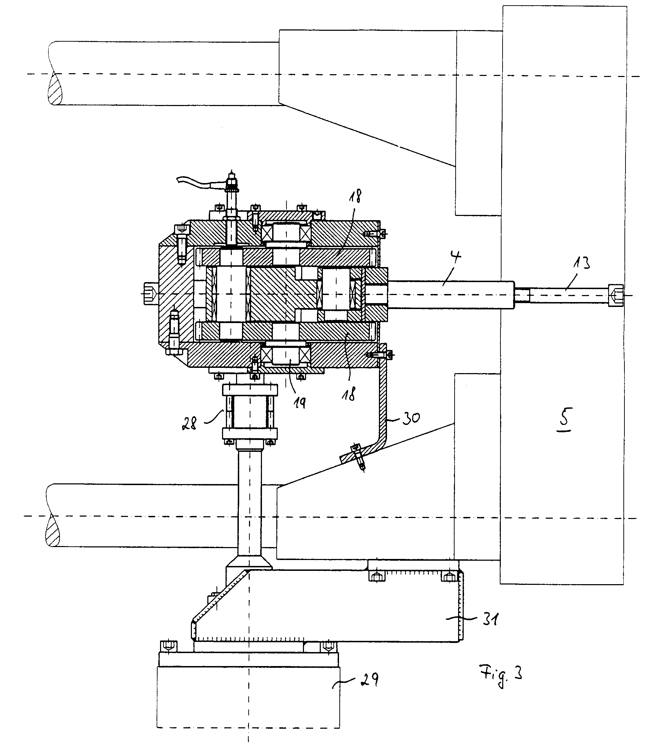

Wie sich weiter aus Fig. 2 ergibt, sind zwei parallel zueinander angeordnete Kurbelscheiben 18 vorgesehen, die neben dem Bolzen 17 noch durch weitere Bolzen 22 und 23 miteinander verbunden sind, so daß zwischen den beiden Kurbelscheiben keine Relativbewegung möglich ist. Beide Kurbelscheiben 18 sind als Zahnräder ausgebildet, deren Zähne 24 ( die lediglich angedeutet sind ) mit ( ebenfalls nur angedeuteten ) Zähnen 25 zweier Ritzel 26 kämmen, die auf einer Antriebswelle 27 angeordnet sind, die, wie aus den Figuren 2 und 3 ersichtlich, über eine Kupplung 28 mit der Abtriebswelle eines nicht im einzelnen dargestellten Getriebes verbunden ist, welches wiederum von einem elektrischen Servomotor 29 betrieben wird.

Am deutlichsten aus Fig. 3 erkennbar ist die Vorrichtung zusätzlich zu den Bolzenschrauben 12 und 13 noch mit Hilfe des Winkelblechs 30 und des Trägers 31 fixiert, so daß zwischen der Vorrichtung 1 und der beweglichen Formaufspannplatte 5 keine Relativbewegung möglich ist, wobei der Träger 31 der Motorbefestigung dient.

Die Ausnehmung 14 im Schlitten 9 deckt in Richtung Formaufspannplatte 5 eine auf den Schlitten 9 aufgeschraubte Platte 32 ab, die eine Aufnahme 33 für einen lediglich strichliert angedeuteten Auswerferstift 34 aufweist, der in einer die Formaufspannplatte 5 und die Formhälfte 8 durchsetzenden Bohrung verschiebbar geführt ist.

Die Arbeitsweise der Vorrichtung ist folgende:

Sobald das gespritzte Formteil in der Form ausreichend fest ist, wird die Formaufspannplatte 5 mittels der Schließeinheit von der feststehenden Formaufspannplatte entfernt. Entweder schon jetzt oder erst, wenn die Öffnungsbewegung abgeschlossen ist, wird die Auswerfervorrichtung 1 aktiviert. Der servoelektrische Antrieb bewegt dabei den Auswerferstift nach einem der Antriebseinheit einprogrammierten Schema, bei dem eine auf das jeweils zu entfernende Teil abgestimmte Auswurfparabel realisiert wird.

Sollte es bei schwer entformbaren Teilen erforderlich sein, wird der Auswerferstift über seinen Antrieb mehrfach hin- und herbewegt.

## Patentansprüche

1. Vorrichtung zum Auswerfen von Spritzgußteilen aus Spritzgießformen mit mindestens einem Auswerferstift (34), der in einer sowohl die Formaufspannplatte (5) als auch die an dieser Formaufspannplatte (5) angeordnete eine Hälfte (8) einer Spritzgießform durchsetzenden Bohrung mittels eines Kurbeltriebs axial verschiebbar ist, wobei der Kurbeltrieb (16,18) in einem Gestell angeordnet ist, das im wesentlichen aus einer Traverse (2) und zwei parallel zu dem mindestens einen Auswerferstift (34) verlaufenden Profilen (3,4) besteht, welche die Traverse (2) mit der die Formhälfte (8) tragenden Formaufspannplatte (5) verbinden und der Kurbeltrieb aus mindestens einer im Gestell drehbar gelagerten Kurbelscheibe (18) mit einem exzentrisch an dieser gelagerten Hebel (16) besteht, der an einem auf den Profilen (3,4) verschiebbar geführten Schlitten (9) angreift, welcher den Auswerferstift (34) trägt und die Kurbelscheibe (18) über einen eigenen motorischen Antrieb (29) verfügt,
dadurch gekennzeichnet,
daß der Kurbeltrieb aus zwei parallel zueinander angeordneten Kurbelscheiben (18) besteht, die synchron antreibbar sind und zwischen denen der den Schlitten (9) verschiebende Hebel (16) gelagert ist.

2. Vorrichtung nach Anspruch 1,
dadurch gekennzeichnet,
daß der Kurbeltrieb (16,18) in einem Gehäuse untergebracht ist, wobei die Kurbelscheiben (18) in den Gehäusewänden (21) gelagert sind.

3. Vorrichtung nach Anspruch 1 oder 2,
dadurch gekennzeichnet,
daß der motorische Antrieb ein Servomotor (29) ist.

4. Vorrichtung nach einem der Ansprüche 1 bis 3,
dadurch gekennzeichnet,
daß die Kraftübertragung vom Motor (29) auf die Kurbelscheiben (18) mittels eines Getriebes und einer Kupplung (28) erfolgt.

## Claims

1. Apparatus for the ejection of injection mouldings from injection moulds, which has at least one ejector pin (34) which by means of a crank mechanism is axially displaceable in a bore which penetrates both the mould mounting plate (5) and that half (8) of an injection mould which is arranged on the latter mould mounting plate (5), with the crank mechanism (16, 18) being arranged in a frame which substantially comprises a cross member (2) and two profiles (3, 4) which run parallel to the at least single ejector pin (34) and connect the cross member (2) to the mould mounting plate (5) which bears the mould half (8), and with the crank mechanism comprising at least one crank disk (18) which is rotatably mounted in the frame and has a lever (16) which is eccentrically mounted thereon and acts upon a slide (9) which is displaceably guided on the profiles (3, 4) and bears the ejector pin (34), and with the crank disk (18) having available its own motor drive (29),
characterised in that
the crank mechanism comprises two crank disks (18) which are arranged parallel to one another and are drivable in synchronous manner, and between which the lever (16) is mounted which displaces the slide (9).

2. Apparatus according to Claim 1,
characterised in that
the crank mechanism (16, 18) is accommodated in a housing, with the crank disks (18) being mounted in the housing walls (21).

3. Apparatus according to Claim 1 or 2,
characterised in that
the motor drive is a servomotor (29).

4. Apparatus according to one of Claims 1 to 3,
characterised in that
the transmission of power from the motor (29) to the crank disks (18) takes place by means of a gear and a clutch (28).

## Revendications

1. Dispositif pour éjecter des pièces moulées par injection de moules à injection, comportant au moins une tige d'éjecteur (34), qui peut coulisser axialement, au moyen d'un mécanisme à manivelle, dans un perçage traversant aussi bien le plateau de fixation (5) du moule qu'une moitié (8) d'un moule d'injection, disposée sur ce plateau de fixation (5) du moule, le mécanisme à manivelle (16, 18) étant placé dans un bâti, qui est essentiellement constitué d'une traverse (2) et de deux profilés (3, 4), s'étendant parallèlement à la ou les tiges d'éjecteur (34), qui relient la traverse (2) au plateau de fixation (5) du moule, portant la moitié de moule (8) et le mécanisme à manivelle est constitué d'au moins un flasque de manivelle (18), monté tournant dans le bâti avec un levier (16) monté excentré sur ce disque, lequel levier agit sur un chariot (9), guidé coulissant sur les profilés (3, 4), lequel chariot porte la tige d'éjecteur (34) et le flasque de manivelle (18) dispose de son propre entraînement motorisé (29), caractérisé en ce que le mécanisme à manivelle est constitué de deux flasques (18), disposés parallèlement entre eux, qui peuvent être entraînés de manière synchrone et entre lesquels est monté le levier (16) déplaçant le chariot (9).

2. Dispositif selon la revendication 1, caractérisé en ce que le mécanisme à manivelle (16, 18) est logé dans un carter, les flasques de manivelle (18) étant montés dans les parois (21) du carter.

3. Dispositif selon les revendications 1 ou 2, caractérisé en ce que l'entraînement motorisé est un servomoteur (29);

4. Dispositif selon l'une des revendications 1 à 3, caractérisé en ce que la transmission des forces du moteur (29) aux flasques de manivelle (18) s'effectue au moyen d'une transmission et d'un accouplement (28).
